# EUROPEAN PATENT APPLICATION

(11) **EP 3 626 438 A1**
(43) Date of publication of application: **25.03.2020**
(21) Application number: 18196159.0
(22) Date of filing: 24.09.2018
(51) Int. Cl.: B29C 65/16, B29C 65/14, B29C 65/00, B29C 65/48, B29C 65/50, B65B 61/20, B29C 65/78

(54) **METHOD AND APPARATUS FOR APPLYING AN EXTRACTION ELEMENT ON A PACKAGING MATERIAL AND PACKAGING MATERIAL**

(71) Applicant: Tetra Laval Holdings & Finance S.A., 1009 Pully (CH)
(72) Inventor: VICINI, Stefano, 41058 Vignola (IT); BORGHI, Davide, 41121 Modena (IT); ROSSI, Stefano, 42123 Reggio Emilia (IT); MARSELLA, Antonio, 40134 Bologna (IT)
(74) Representative: Tetra Pak - Patent Attorneys SE

(57) **Abstract**

There is described a method for applying an extraction element (3) on a first packaging material (4), the method comprising the steps of activating by means of an electromagnetic radiation an activable material (12) so as to control the activable material (12) from a non-adhesive state into an adhesive state, and applying the extraction element (3) on the first packaging material (4) by means of the activable material (12) controlled into the adhesive state. There is further described an apparatus for applying an extraction element (3) on a first packaging material (4), the apparatus (8) comprises at least one activator device (14) configured to control an activable material (12) from a non-adhesive state into an adhesive state by means of an electromagnetic radiation, and an applicator device configured to apply the extraction element (3) on the first packaging material (4) by means of the activable material (12) controlled into the adhesive state. There is also described a packaging material (4, 6a) for forming a package (2) containing a pourable product and provided with an attached extraction element (3); at least a portion of the packaging material (4, 6a) comprises an activable material (12) configured to be controlled from a non-adhesive state into an adhesive state by means of an electromagnetic radiation, the extraction element (3) is attachable on the package (2) by means of the activable material (12) controlled in the adhesive state.

## Description

### TECHNICAL FIELD

The present invention relates to a method for applying an extraction element on a packaging material, in particular a method for applying a drinking straw on a package, the package being formed from such packaging material and being configured to contain a pourable product, in particular a pourable food product.

The present invention further relates to an apparatus for applying an extraction element on a packaging material, in particular an apparatus for applying a drinking straw on a package, the package being formed from such packaging material and being configured to contain a pourable product, in particular a pourable food product.

The present invention also relates to a packaging material, in particular a packaging material for forming a package provided with an attached extraction element and configured to contain a pourable product, in particular a pourable food product.

### BACKGROUND ART

As it is generally known, many pourable food products, such as fruit juice, UHT (ultra-high temperature-treated) milk, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a number of lamination layers: a base layer, e.g. made of paper, covered on both sides with layers of heat-seal plastic material, e.g. polyethylene. In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Many single-use disposable packages made of such packaging material and typically used for containing beverages such as fruit juice are manufactured on fully automatic packaging assemblies in so-called portion volumes, intended to be consumed directly from the package. Generally, these packages are provided with a drinking straw, which is enveloped in a protective envelope and secured to one side wall of the package.

On another wall of the package, often the top wall, a hole is obtained by punching out the packaging material forming the package, in particular by punching out the base layer made of paper, thereby obtaining a hole covered by the other lamination layers.

This configuration allows to penetrate the hole by perforating the lamination layers covering the hole with the drinking straw accompanying the package, in order to consume the pourable food product enclosed within the package.

For the purpose of securing the drinking straws to the respective packages, the known packaging assemblies comprise one or more straw applicator units, which are configured to apply drinking straws, housed in their protective envelopes, on fully formed and sealed packages advanced through such straw applicator units.

Furthermore, each straw applicator unit is configured to receive a succession of interconnected protective envelopes containing respective drinking straws.

In particular, the protective envelopes are received and guided along an application path by a driving element of the straw applicator unit, typically a driving rotatable drum.

Adjacent the drum there are devices for cutting the succession of interconnected protective envelopes into individual protective envelopes, each one housing a respective drinking straw.

The straw applicator units further comprise an applicator device for applying each enveloped drinking straw to one side wall of the package, while the package is advanced by a conveyor along an advancement direction.

A typical known applicator device consists in an oscillating arm which, in use, extracts one enveloped drinking straw at a time from the drum, conveys the drinking straw towards the package and pushes such drinking straw against the side wall of the package.

Prior to the application of the drinking straw, one or more securement points are provided.

Typically, such securement points are provided on the package and consist of hot melt adhesive, usually molten glue which is applied by gluing means, for example glue guns, on the side wall of the package, or on the (enveloped) drinking straw.

The hot melt adhesive glues the drinking straw envelope in place and retains the drinking straw when the hot melt adhesive has set.

Although providing a functionally valid method for applying drinking straws to packages containing a pourable food product, the known straw applicators are still open for further improvement, in particular as to reduce the overall costs and the use of consumable resources.

### DISCLOSURE OF INVENTION

It is therefore an object of the present invention to provide a method for applying an extraction element on a packaging material, which is designed to fulfill the above-mentioned need in a straightforward and low-cost manner.

This object is achieved by a method for applying an extraction element on a packaging material as claimed in claim 1.

It is a further object of the present invention to provide an apparatus for applying an extraction element on a packaging material, which is designed to fulfill the above-mentioned need in a straightforward and low-cost manner.

This object is achieved by an apparatus for applying an extraction element on a packaging material as claimed in claim 11.

It is an even further object of the present invention to provide a packaging material, which is designed to fulfill the above-mentioned need in a straightforward and low-cost manner.

This object is achieved by a packaging material as claimed in claim 13.

### BRIEF DESCRIPTION OF THE DRAWINGS

Two non-limiting embodiments of the present invention will be described by way of example with reference to the accompanying drawings, in which:
Figure 1 schematically shows a packaging assembly for carrying out a method for applying an extraction element on a packaging material according to a first embodiment of the present invention;
Figure 2 schematically illustrates a succession of steps according to the first embodiment of the method of the present invention; and
Figure 3 schematically illustrates a succession of steps according to a second embodiment of the method of the present invention.

### BEST MODE FOR CARRYING OUT THE INVENTION

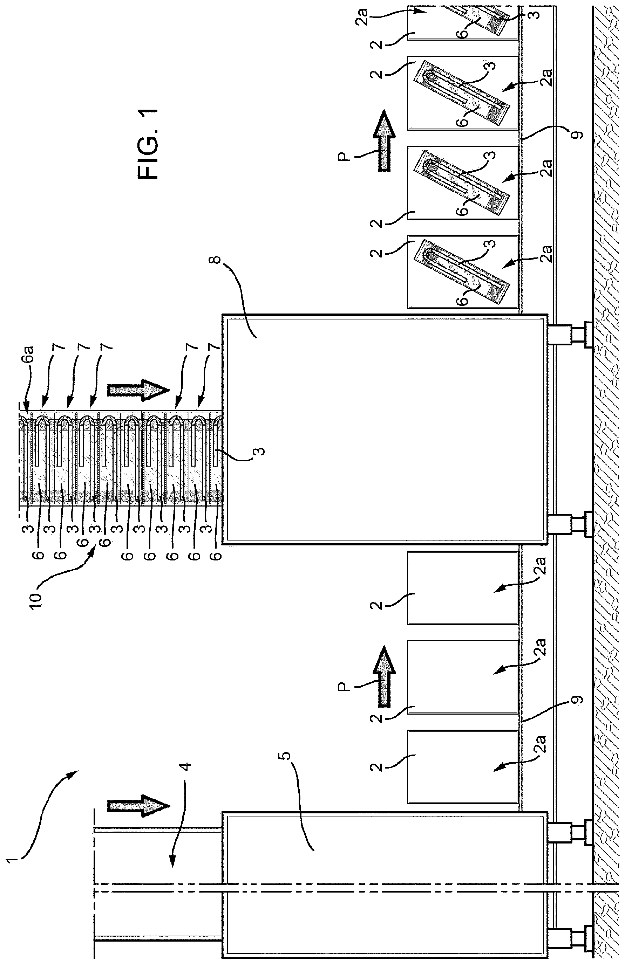

With reference to Figure 1, number 1 indicates as a whole a packaging assembly configured to form and seal a plurality of packages 2, suitable for containing a pourable product, and to apply respective extraction elements thereon, the extraction elements are designed to extract such pourable product from the interior of packages 2.

According to this non-limiting preferred embodiment, the extraction elements are drinking straws 3, in particular drinking straws 3 of the flexible type.

In detail, each drinking straw 3 comprises a first straight portion, a second straight portion, shorter than the first straight portion, and a curved bellows portion, which connects the first straight portion and the second straight portion.

In greater detail, the bellows defined by the curved bellows portion permits a movement of the second portion relatively to the first portion, so that the drinking straw 3 can be conveniently folded to allow the user to extract (drink) the pourable product.

In an alternative embodiment not shown, the extraction element could be a spoon, a fork, or the like.

In the embodiment shown, packages 2 are configured to contain a pourable food product, such as fruit juice, milk, yogurt or the like, and are formed and sealed starting from a sheet of a first packaging material 4.

In particular, first packaging material 4 has a multilayer structure (not shown), and comprises at least one base layer of fibrous material, e.g. paper, preferably covered on both sides with respective layers of heat-seal plastic material, e.g. polyethylene.

In the case of aseptic packages for long-storage products, such as UHT milk, first packaging material 4 also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the food product.

As schematically shown in Figure 1, packaging assembly 1 comprises a forming unit 5 configured to receive a sheet of first packaging material 4 and to cut, fold and seal first packaging material 4 so as to obtain a plurality of packages 2, according to a manner known and not described in detail.

In particular, packages 2 obtained thereby are single-use disposable packages 2 onto which a respective drinking straw 3 of the above-mentioned type has to be attached.

In this specific example described, drinking straws 3 are at least partially housed, preferably entirely housed, in individual protective envelopes 6 made of a second packaging material 6a, with the purpose of maintaining the drinking straws 3 in proper hygienic conditions.

In particular, second packaging material 6a is made of a polymeric material, preferably polyethylene.

In light of the above, second packaging material 6a is formed into a plurality of envelopes 6 for housing at least respective portions of drinking straws 3.

Hence, each envelope 6 and the respective drinking straw 3 constitute an attachable assembly 7 configured to be applied, in particular attached, on a respective package 2.

In particular, attachable assemblies 7 are configured to be applied on respective side walls 2a of packages 2.

On another wall of each package 2, for example the top wall, a hole (not shown) is obtained by punching out first packaging material 4, in particular by punching out the base layer made of paper, thereby obtaining a hole covered by at least one of the other layers, i.e. the heat-seal plastic material layers and the gas-and-light barrier layer.

This configuration makes it possible to penetrate the hole by perforating the layer (s) covering the hole with the drinking straw 3 attached on package 2, in order to extract the pourable product contained therein.

As schematically shown in Figure 1, packaging assembly 1 further comprises an applicator unit 8 configured to apply each attachable assembly 7, i.e. each drinking straw 3 partially or entirely housed in its respective envelope 6, on a respective package 2, in particular on side wall 2a of such package 2.

In particular, the formed and sealed packages 2 exiting from forming unit 5 are advanced on a conveyor 9, for example a belt conveyor, along an advancement direction P and are fed to applicator unit 8 for the application of attachable assemblies 7 thereon.

For this purpose, applicator unit 8 receives, in use, a succession of interconnected attachable assemblies 7, i.e. envelopes 6 housing respective drinking straws 3, preferably in the form of a continuous strip 10 of interconnected attachable assemblies 7.

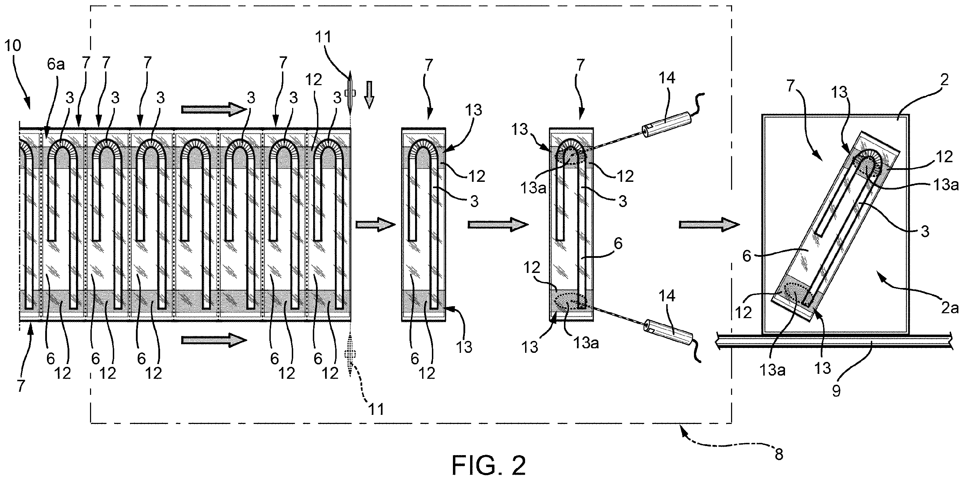

As schematically shown in Figure 2, continuous strip 10 is advanced and guided, in use and in a manner known and not described in detail, within applicator unit 8 and is cut by cutting means 11 of applicator unit 8 into individual attachable assemblies 7.

In the following, since all the individual attachable assemblies 7 obtained from the continuous strip 10 are identical to one another and for the sake of brevity, only one single attachable assembly 7 to be applied on a respective package 2 will be described.

However, all the features disclosed hereinafter for such attachable assembly 7 are applicable to all attachable assemblies 7 obtained from the continuous strip 10.

After being cut from the continuous strip 10, attachable assembly 7 is applied, in particular attached, on side wall 2a of the respective package 2.

Prior to the application, securement points are provided for applying and retaining attachable assembly 7 on such package 2.

According to this first preferred embodiment of the present invention, attachable assembly 7 is provided with, in particular comprises, an activable material 12 configured to be controlled from a non-adhesive state to an adhesive state by means of an electromagnetic radiation.

By way of example, activable material 12 may be defined by a layer of wax, resin, polyethylene, or the like.

In particular, activable material 12 is a portion of the material, for example the polyethylene, forming attachable assembly 7.

Conveniently, activable material 12 is treated so as to be capable of absorbing the above-mentioned electromagnetic radiation.

Preferably, activable material 12 is made in a color adapted to absorb the electromagnetic radiation, such as a dark color, for example black or gray or dark gray.

As visible in Figure 2, the activable material 12 is preferably provided on envelope 6, in particular on a pair of activable areas 13 of such envelope 6.

In particular, activable material 12 is a portion of envelope 6, which has been treated so as to be capable of absorbing the electromagnetic radiation.

By way of example, activable material 12 is defined by a dark-colored tape applied on envelope 6 at activable areas 13.

According to a possible alternative embodiment, activable material 12 could be defined by a dark-colored material arranged at least behind activable areas 13 during the control of activable material 12 by means of the electromagnetic radiation.

According to a further possible alternative embodiment, activable areas 13 could be defined by dark-colored zones of envelope 6.

In other words, second packaging material 6a, of which envelope 6 is made, is provided with, in particular comprises, two activable areas 13 made of activable material 12.

In this described embodiment, activable areas 13 are located at opposite end portions of envelope 6. Furthermore, activable areas 13 have a substantially rectangular shape.

According to a possible alternative embodiment not shown, the activable material 12 could be provided directly on each drinking straw 3. In this case, drinking straw 3 is not housed in a respective envelope 6 and is intended to be directly attached to package 2.

As schematically shown in Figure 2, applicator unit 8 comprises at least one activator device, in particular an electromagnetic radiation generator device 14, two in this preferred embodiment. In detail, electromagnetic radiation generator devices 14 are configured to direct, in particular to irradiate, with the above-mentioned electromagnetic radiation, each one of the activable areas 13, so as to control the activable material 12 from the non-adhesive state into the adhesive state.

Preferably, the two electromagnetic radiation generator devices 14 are laser beam generator devices, such as optical fiber LED lasers. Hence, the activable material 12 is configured to be controlled from a non-adhesive state to an adhesive state by directing respective laser beams onto the activable areas 13.

By controlling the activable material 12 of the activable areas 13 in the adhesive state, an activated adhesive area 13a is created within each activable area 13. Such adhesive areas 13a define the above-mentioned securement points.

Applicator unit 8 further comprises an applicator device (known per se and not shown) configured to apply attachable assembly 7 on side wall 2a of package 2. In detail, attachable assembly 7 is attached and retained on such side wall 2a by means of the activable material 12.

Preferably, adhesive areas 13a are made of melted material, which works as glue once attachable assembly 7 contacts side wall 2a of package 2.

In this way, drinking straw 3, housed in its envelope 6 made of second packaging material 6a, is applied on package 2.

According to this preferred embodiment, the laser beams are conveniently synchronized with cutting means 11 and with the applicator device, so as to be directed on activable areas 13 only when attachable assembly 7 is in the proper position, in order to avoid possible damage to drinking straw 3, envelope 6, first packaging material 4 or second packaging material 6a.

The operation of packaging assembly 1 is described hereinafter with reference to a single package 2, formed from a sheet of first packaging material 4, exiting from forming unit 5 and being advanced by conveyor 9 along advancement direction P. Furthermore, the operation will be described starting from a condition in which such package 2 enters applicator unit 8 and a continuous strip 10 of interconnected attachable assemblies 7 is fed to applicator unit 8.

In this condition, an individual attachable assembly 7, i.e. an individual envelope 6 housing a single respective drinking straw 3, is cut, by cutting means 11, from continuous strip 10.

After attachable assembly 7 is cut, electromagnetic radiation generator devices 14 direct a laser beam on each activable area 13 of envelope 6 of such attachable assembly 7, thereby activating the activable material 12 provided on such activable areas 13. In this way, activable material 12 is controlled from the non-adhesive state into the adhesive state.

Consequently, respective adhesive areas 13a within activable areas 13 are created.

At this point, attachable assembly 7 is applied on side wall 2a of package 2 by means of the applicator device of applicator unit 8 and is retained on side wall 2a by activable material 12.

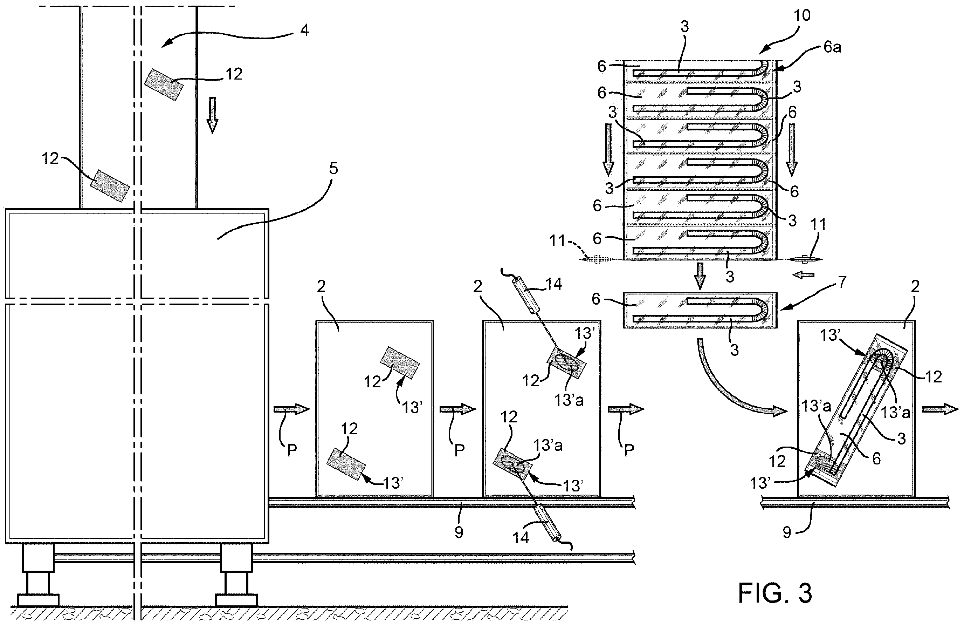

Figure 3 shows a second preferred embodiment of the method according to the present invention.

In the following, only the differences with respect to the first embodiment of the method according to the present invention will be described, using the same names and/or reference numerals for equivalent steps and/or similar or equivalent parts.

In particular, according to this second preferred embodiment, activable material 12 is provided on packages 2.

More specifically, activable material 12 is provided on first packaging material 4, instead of being provided on second packaging material 6a.

In particular, activable material 12 defines at least a portion of the above-mentioned heat-seal plastic material layer of first packaging material 4 which has been treated so as to be capable of absorbing the electromagnetic radiation.

Preferably, activable material 12 is provided on two activable areas 13' of each sheet of first packaging material 4.

In particular, activable areas 13' are portions of first packaging material 4 which have been treated so as to be capable of absorbing the electromagnetic radiation.

In detail, once packages 2 are formed from respective sheets of first packaging material 4, such activable areas 13' are arranged on the respective side walls 2a of packages 2.

According to a possible alternative embodiment, activable areas 13' could be defined by a dark-colored area of the above-mentioned base layer, successively covered by the heat-seal plastic material layer.

According to a further possible alternative embodiment, activable areas 13' could be defined by dark-colored zones of the heat-seal plastic material layer of first packaging material 4.

The activable areas 13' are destined to be activated by electromagnetic radiation generator devices 14 in the same manner described above for activable areas 13.

After the activation step is carried out, an activated adhesive area 13a' is created within each activable area 13'. The two adhesive areas 13a' define a pair of securement points for attachable assemblies 7 to be applied and retained on the respective packages 2.

In light of the above, in use, packages 2 provided with two activable areas 13' made of activable material 12 are advanced by conveyor 9 along advancement direction P.

According to this second preferred embodiment, after activating the two activable areas 13' and, therefore, after the respective adhesive areas 13a' made of activable material 12 controlled into the adhesive state are created, the single attachable assembly 7 cut from the continuous strip 10, is applied on package 2 at activable areas 13'.

Conveniently, as visible in Figure 3, second packaging material 6a constituting envelopes 6 of drinking straws 3 is not provided with any activable material 12.

The advantages of the method and of the packaging material 4, 6a according to the present invention will be clear from the foregoing description.

In particular, the overall process as well as the architecture of applicator unit 8 is simplified, as there is no need for a glue gun to provide molten glue for attaching and retaining apply the drinking straws 3 on packages 2.

Furthermore, the use of a consumable resource, i.e. glue, is avoided, thereby reducing the overall costs.

Moreover, production time and production costs may be reduced, as the glue gun needs long warm up time and must be continuously warmed, whilst the laser device only needs energy while activating the laser beam and is immediately ready to use.

In addition, production jamming and/or dirtiness due to possible glue spills can be avoided.

Clearly, changes may be made to the method and to packaging material 4, 6a as described herein without, however, departing from the scope of protection as defined in the accompanying claims.

In particular, one or more attachable assemblies 7 could be applied directly on one single respective sheet of first packaging material 4 before the formation of a respective package 2 therewith, or during the formation of such respective package 2 therewith. In this last case, all the step of the method concerning the application of the attachable assemblies 7 on first packaging material 4 are carried out before the respective packages 2 are formed from such first packaging material 4.

Moreover, both first packaging material 4 and second packaging material 6a could be provided with activable material 12.

In this last case, first packaging material 4 would be provided with activable areas 13' and second packaging material 6a would be provided with activable areas 13.

## Claims

1. A method for applying an extraction element (3) on a first packaging material (4), the method comprising the steps of:
- activating by means of an electromagnetic radiation an activable material (12) so as to control said activable material (12) from a non-adhesive state into an adhesive state; and
- applying said extraction element (3) on said first packaging material (4) by means of the activable material (12) controlled into said adhesive state.

2. The method according to claim 1, wherein the step of activating is performed by directing a laser beam on said activable material (12) for controlling said activable material (12) in said adhesive state.

3. The method according to claim 1 or 2, wherein said activable material (12) is provided on at least an activable area (13') of said first packaging material (4) .

4. The method according to claim 3, further comprising the step of:
- advancing a package (2), formed from said first packaging material (4) and configured to contain and/or containing a pourable product, along an advancement direction (P) prior to said step of activating;
wherein said activable area (13') is provided on said package (2);
and wherein, during the step of applying, said extraction element (3) is applied on said package (2) at said activable area (13').

5. The method according to claim 1 or 2, and further comprising the step of:
- providing a second packaging material (6a) defining an envelope (6) for housing at least a portion of said extraction element (3);
wherein said envelope (6) and said extraction element (3) constitute an attachable assembly (7);
and wherein said activable material (12) is provided on said attachable assembly (7).

6. The method according to claim 5, wherein said activable material (12) is provided on said envelope (6).

7. The method according to claim 6, wherein said activable material (12) is provided at least on an activable area (13) of said envelope (6).

8. The method according to any one of claims 5 to 7, further comprising the steps of:
- feeding a succession (10) of interconnected attachable assemblies (7) to an applicator unit (8);
- cutting said succession (10) of interconnected attachable assemblies (7) into individual attachable assemblies (7), prior to the step of activating.

9. The method according to any one of the foregoing claims, wherein said extraction element (3) is a drinking straw.

10. The method according to any one of the foregoing claims, wherein said activable material (12) is treated so as to be capable of absorbing said electromagnetic radiation.

11. Apparatus (8) for applying an extraction element (3) on a first packaging material (4); said apparatus (8) comprising:
- at least one activator device (14) configured to control an activable material (12) from a non-adhesive state into an adhesive state by means of an electromagnetic radiation; and
- an applicator device configured to apply said extraction element (3) on said first packaging material (4) by means of said activable material (12) controlled into said adhesive state.

12. The apparatus according to claim 11, wherein said activator device (14) is a laser device.

13. Packaging material (4, 6a) for forming a package (2) containing a pourable product and provided with an attached extraction element (3); at least a portion of said packaging material (4, 6a) comprising an activable material (12) configured to be controlled from a non-adhesive state into an adhesive state by means of an electromagnetic radiation; said extraction element (3) being attachable on said package (2) by means of said activable material (12) controlled in said adhesive state.

14. The packaging material according to claim 13, wherein said activable material (12) is configured to be controlled from said non-adhesive state to said adhesive state by directing a laser beam onto said activable material (12).

15. The packaging material according to claim 13 or 14, wherein said packaging material (4) is a multi-layer packaging material configured for forming said package (2) and comprising at least one layer of fibrous material.

16. The packaging material according to claim 13 or 14, wherein said packaging material (6a) defines an envelope (6) for housing at least a portion of said extraction element (3).

17. The packaging material according to any one of the claims 13 to 16, wherein said activable material (12) is treated so as to be capable of absorbing said electromagnetic radiation.
